# EUROPÄISCHE PATENTSCHRIFT

(11) **EP 4 049 858 B1**
(45) Veröffentlichungstag und Bekanntmachung des Hinweises auf die Patenterteilung: **21.02.2024**
(21) Anmeldenummer: 21211784.0
(22) Anmeldetag: 01.12.2021
(51) Int. Cl.: B60C 7/14

(54) **FAHRZEUGRAD**
VEHICLE WHEEL
ROUE DE VÉHICULE

(30) Priorität: 26.02.2021 DE 102021201824
(43) Veröffentlichungstag der Anmeldung: 31.08.2022
(73) Patentinhaber: Continental Reifen Deutschland GmbH, 30165 Hannover (DE)
(72) Erfinder: Gandyra, Stefan, 30165 Hannover (DE); Komischke, Ralf, 30165 Hannover (DE); Winkler, Jens, 30165 Hannover (DE)
(74) Vertreter: Continental Corporation

(56) Entgegenhaltungen:
- WO-A1-2019/227205
- CN-A- 111 114 204
- CN-A- 111 532 089
- CN-A- 111 546 838
- DE-A1-102018 200 556
- JP-A- 2021 024 394
- US-A1- 2010 132 865
- US-A1- 2018 354 304
- US-A1- 2019 131 687
- US-A1- 2019 351 702

## Beschreibung

Die Erfindung betrifft ein Fahrzeugrad.

Bei Luftreifen ist es bekannt, Sensoren im Reifen zu integrieren, um beispielsweise den Reifendruck zu überwachen. Diese sind jedoch als zusätzliche Bauteile im luftgefüllten Reifeninneren angeordnet und nicht integraler Bestandteil der Reifenstruktur, beispielsweise an oder auf den Festigkeitsträgern.

Die US 2019/351702 A1, WO 2019/227205 A1, US 2019/131687 A1,
JP 2021 024394 A und US 2018/354304 A1 offenbaren bekannte Fahrzeugreifenkonstruktionen.

Der Erfindung lag die Aufgabe zugrunde, einen Fahrzeugrad bereitzustellen, bei dem Sensoren auf einfache Weise am Fahrzeugrad angeordnet werden können.

Gelöst wird die Aufgabe durch Anspruch1.

Ein Vorteil der Erfindung ist insbesondere darin zu sehen, dass der Sensor auf einfache Weise an der Skelett-Struktur des Fahrzeugrades angeordnet werden kann.

An der Skelett-Struktur lassen sich beispielsweise einfache Halterungselemente für die zu montierenden Sensoren anordnen.

Beim Zusammenbau des Fahrzeugrades werden die Sensoren direkt an den Halterungselementen befestigt. Danach kann dann die Ummantelung der Skelett-Struktur mit einem Elastomermaterial erfolgen.

Außerdem können die Sensoren beispielsweise in Form eines Dehnungssensors an Positionen der Skelett-Struktur befestigt werden, die später für die Auswertung der Fahrdynamik des Fahrzeugrades besonders interessant sind.

Erfindungsgemäß ist vorgesehen, dass der Sensor mit einer Steck-Verbindung mit einem Skelett-Element verbunden ist.

Entsprechende Steckelemente lassen sich einfach an den Skelett-Elementen integrieren.

Erfindungsgemäß umfasst die Steckverbindung Klipp-Verbindungen am Skelett-Element .

In einer weiteren vorteilhaften Weiterbildung der Erfindung ist vorgesehen, dass der Sensor einen Dehnungssensor, Beschleunigungssensor und/oder Temperatursensor umfasst.

Dadurch lassen sich wichtige Eigenschaften am Fahrzeugrad messen, die für die Fahrdynamik des Fahrzeugrades von Bedeutung sind.

In einer weiteren vorteilhaften Weiterbildung der Erfindung ist vorgesehen, dass an der Skelett-Struktur weitere elektronische Bauteile in Form von Kabeln, Energiegeneratoren, Batterien und/ oder Aktuatoren integriert sind.

Diese Bauteile lassen sich einfach an der Skelett-Struktur integrieren.

In einer weiteren vorteilhaften Weiterbildung der Erfindung ist vorgesehen, dass die elektronischen Bauteile mit einer Verklebung an der Skelett-Struktur befestigt sind. Mit einer Verklebung lässt sich eine hochfeste Verbindung zwischen den beiden Bauteilen erzielen.

Erfindungsgemäß umfasst die Skelett-Struktur ein inneres und einen äußeres Ringelement, die durch eine Vielzahl von Federungselementen verbunden sind.

Dadurch lässt sich eine optimale Federung für das Fahrzeugrad erzielen.

In einer weiteren vorteilhaften Weiterbildung der Erfindung ist vorgesehen, dass zumindest Bereiche der Federungselemente und/oder der Ringelemente mit Verstärkungselementen in Form von textilen Fasern, Glasfasern und/oder Metallfasern verstärkt sind.

Dadurch lässt sich eine optimale Versteifung der Skelett-Elemente erzeugen.

In einer weiteren vorteilhaften Weiterbildung der Erfindung ist vorgesehen, dass die Verstärkungselemente in Form einer Wicklung oder mit einem dreidimensionalen Druckverfahren an der Skelett-Struktur angeordnet sind.

Dadurch lassen sich die Verstärkungselemente einfach an den Skelett-Elementen anordnen.

In einer weiteren vorteilhaften Weiterbildung der Erfindung ist vorgesehen, dass die Skelettstruktur mit den elektronischen Sensoren und den Verstärkungselementen mit einem Elastomermaterial ummantelt ist. Dadurch wird die Skelett-Struktur und die elektronischen Sensoren effektiv vor mechanischen Beanspruchungen und vor Feuchtigkeit geschützt.

In einer weiteren vorteilhaften Weiterbildung der Erfindung ist vorgesehen, dass die gesamte Skelettstruktur oder einzelne Skelett-Elemente mit einem dreidimensionalen Druckverfahren oder einem Spritzgussverfahren hergestellt werden.

Dadurch wird die Herstellung der Skelett-Struktur wesentlich vereinfacht.

In einer weiteren vorteilhaften Weiterbildung der Erfindung ist vorgesehen, dass die Skelettstruktur, die Verstärkungselemente und/ oder die elektronischen Bauteile vor dem Zusammenbau mit einem Haftvermittler ummantelt werden.

Dadurch werden die Festigkeitseigenschaften zwischen den zu verbindenden Bauteilen wesentlich verbessert.

Anhand eines Ausführungsbeispiels wird die Erfindung im Folgenden näher beschrieben.

Es zeigen:
Fig. 1: Einen Teilausschnitt eines Fahrzeugrades in einer Seitenansicht.
Fig. 2: Den Teilausschnitt des Fahrzeugrades in der Figur 1 in einer dreidimensionalen Ansicht von oben.

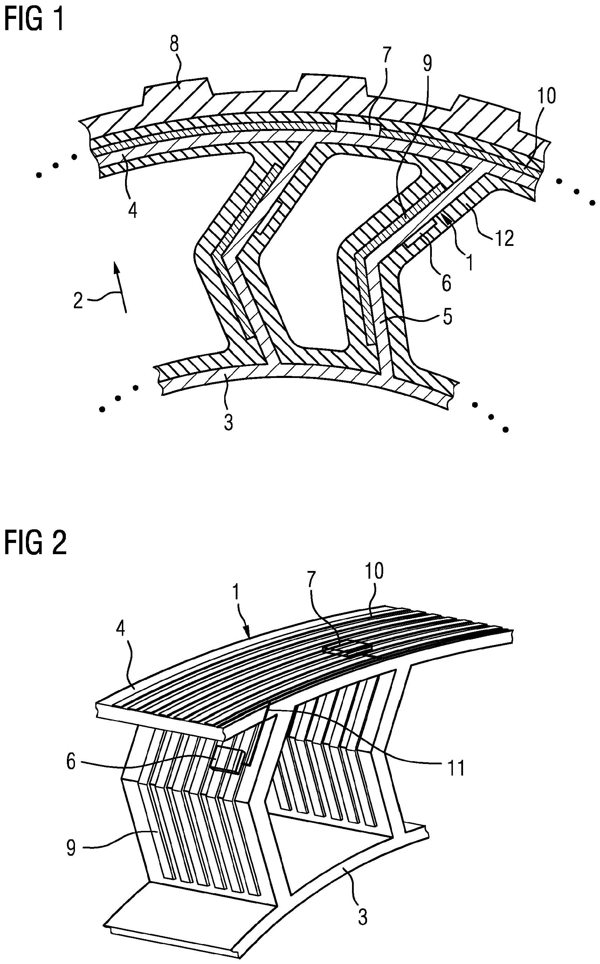

Die Figur 1 zeigt einen Teilausschnitt des erfindungsgemäßen Fahrzeugrades in einer Seitenansicht. Die Skelett-Struktur 1 des Fahrzeugrades umfasst ein inneres Ringelement 3 und eines äußeres Ringelement 4, die durch eine Vielzahl von V-förmigen Federungselementen 5 verbunden sind. Die Figur zeigt lediglich einen Abschnitt des Fahrzeugrades, welches im Wesentlichen rotationssymmetrisch aufgebaut ist. Das Fahrzeugrad setzt sich in beide Richtungen in Umfangsrichtung rotationssymmetrisch fort. Auf einer Seite des Federungselementes 5 ist ein Sensor 6, beispielsweise ein Dehnungssensor, angeordnet. Dieser Dehnungssensor wird über eine Steckverbindung mit dem Federungselement 9 verbunden. Auf der Oberseite des äußeren Ringelementes 4 ist ein zweiter Sensor 7, beispielsweise ein Temperatursensor, angeordnet. Mit diesem Sensor lässt sich beispielsweise die Temperatur des Laufstreifens 8 überwachen. Die Federungselemente 5 und die Außenseite des äußeren Ringelementes sind über Verstärkungselemente 9 und 10 verstärkt. Bei diesen Verstärkungselementen kann es sich beispielsweise um textile Fasern, Glasfasern oder Metallfasern handeln. Es ist ebenfalls denkbar, dass die Verstärkungselemente in Form von Festigkeitsträgerkorden ausgestaltet sind. Die Skelett-Struktur 1, die Sensoren 6 und 7 und die Verstärkungselemente 9 und 10 werden vollständig durch ein Elastomermaterial ummantelt. Der Laufstreifen 8 wird beispielsweise über eine hochfeste Verklebung mit dem äußeren Ring 4 der Skelett-Struktur 1 verbunden.

Die Figur 2 zeigt schematisch den Teilausschnitt des Fahrzeugrades in der Figur 1 in einer dreidimensionalen Ansicht von schräg oben. Die Sensoren 6 sind direkt an Skelett-Elementen der Skelett-Struktur 1 befestigt. Die Skelett-Elemente werden in der dargestellten Weise durch Verstärkungselemente 9 und 10 verstärkt. Die Verstärkungselemente 9 und 10 können beispielsweise in Form von Textilfasern oder Metallfasern ausgebildet sein, die parallel zueinander das Skelett-Element überspannen.

An der Skelett-Struktur 1 können außerdem eine Vielzahl von Kabel 11 integriert werden, die mit den Sensoren 6 und 7 und nicht dargestellten Energiequellen verbunden werden.

Die Steuerungseinheit, mit der die Messsignale der Sensoren erfasst werden, kann ebenfalls in der Skelett-Struktur des Fahrzeugrades integriert werden.

### Bezugszeichenliste

- 1: Skelettstruktur
- 2: Radiale Richtung des Fahrzeugreifens
- 3: Inneres Ringelement (Skelettelement)
- 4: Äußeres Ringelement (Skelettelement)
- 5: V-förmiges Federungselement der Skelettstruktur
- 6: Dehnungssensor am Federungselement
- 7: Temperatursensor unterhalb des Laufstreifens
- 8: Laufstreifen
- 9: Verstärkungselement an Federungselement
- 10: Verstärkungselement an äußeren Ringelement
- 11: Kabel
- 12: Ummantelung mit Elastomermaterial

## Patentansprüche

1. Fahrzeugrad mit einem Laufstreifen (8),
wobei der Laufstreifen (8) auf der Außenseite eines Ringelementes (4) angeordnet ist und das Fahrzeugrad eine Vielzahl von Federungselementen (5) aufweist,
das Fahrzeugrad eine Skelettstruktur (1) aufweist und an mindestens einem Skelett-Element (4,5) der Skelettstruktur (1) ein elektronischer Sensor (6,7) angeordnet ist,
wobei die Skelett-Struktur (1) ein inneres und ein äußeres Ringelement (3,4)
umfasst, die durch die Vielzahl von Federungselementen (5) verbunden sind, **dadurch gekennzeichnet, dass**
der elektronische Sensor (6,7) mit einer Steckverbindung mit einem Skelett-Element (4,5) verbunden ist, wobei die Steckverbindung einzelne Klipp-Verbindungen am Skelett-Element (1) umfassen.

2. Fahrzeugrad nach Anspruch 1,
**dadurch gekennzeichnet, dass**
der Sensor (6,7) einen Dehnungssensor, Beschleunigungssensor und/oder Temperatursensor umfasst.

3. Fahrzeugrad nach einem der vorhergehenden Ansprüche,
**dadurch gekennzeichnet, dass**
an der Skelett-Struktur (1) weitere elektronische Bauteile in Form von Kabeln, Energiegeneratoren, Batterien und/ oder Aktuatoren integriert sind.

4. Fahrzeugrad nach Anspruch 3,
**dadurch gekennzeichnet, dass**
die weiteren elektronischen Bauteile mit einer Verklebung an der Skelett-Struktur befestigt sind.

5. Fahrzeugrad nach einem der vorhergehenden Ansprüche,
**dadurch gekennzeichnet, dass**
zumindestens Bereiche der Federungselemente (5) und/oder der Ringelemente (3,4) mit Verstärkungselementen (9,10) in Form von textilen Fasern, Glasfasern und/oder Metallfasern verstärkt sind.

6. Fahrzeugrad nach Anspruch 5,
**dadurch gekennzeichnet, dass**
die Verstärkungselemente (9,10) in Form einer Wicklung oder mit einem dreidimensionalen Druckverfahren an der Skelett-Struktur (1) angeordnet sind.

7. Fahrzeugrad nach Anspruch 5,
**dadurch gekennzeichnet, dass**
die Skelettstruktur (1) mit den elektronischen Sensoren (6,7) und den Verstärkungselementen (9,10) mit einem Elastomermaterial (12) ummantelt ist.

## Claims

1. Vehicle wheel with a tread (8),
the tread (8) being arranged on the outer side of a ring element (4) and the vehicle wheel having a multiplicity of suspension elements (5), the vehicle wheel having a skeleton structure (1), and an electronic sensor (6, 7) being arranged on at least one skeleton element (4, 5) of the skeleton structure (1),
the skeleton structure (1) comprising an inner and an outer ring element (3, 4), which are connected by the multiplicity of suspension elements (5), **characterized in that**
the electronic sensor (6, 7) is connected to a skeleton element (4, 5) by a plug-in connection,
the plug-in connection comprising individual clip connections on the skeleton element (1).

2. Vehicle wheel according to Claim 1, **characterized in that**
the sensor (6, 7) comprises a strain sensor, an acceleration sensor and/or a temperature sensor.

3. Vehicle wheel according to one of the preceding claims, **characterized in that**
further electronic components in the form of cables, energy generators, batteries and/or actuators are integrated on the skeleton structure (1).

4. Vehicle wheel according to Claim 3, **characterized in that**
the further electronic components are fastened on the skeleton structure by an adhesive bond.

5. Vehicle wheel according to one of the preceding claims, **characterized in that**
at least regions of the suspension elements (5) and/or of the ring elements (3, 4) are reinforced by reinforcing elements (9, 10) in the form of textile fibres, glass fibres and/or metal fibres.

6. Vehicle wheel according to Claim 5, **characterized in that**
the reinforcing elements (9, 10) are arranged on the skeleton structure (1) in the form of a winding or by a three-dimensional printing process.

7. Vehicle wheel according to Claim 5, **characterized in that** the skeleton structure (1), with the electronic sensors (6, 7) and the reinforcing elements (9, 10), is encapsulated by an elastomer material (12).

## Revendications

1. Roue de véhicule comprenant une bande de roulement (8),
dans laquelle la bande de roulement (8) est disposée sur la face extérieure d'un élément annulaire (4), et la roue de véhicule présente une pluralité d'éléments de suspension (5), la roue de véhicule présente une structure de squelette (1), et un capteur électronique (6, 7) est disposé sur au moins un élément de squelette (4, 5) de la structure de squelette (1),
dans laquelle la structure de squelette (1) comprend un élément annulaire intérieur et extérieur (3, 4) qui sont reliés par la pluralité d'éléments de suspension (5),
**caractérisée en ce que**
le capteur électronique (6, 7) est relié par une connexion enfichable à un élément de squelette (4, 5), dans laquelle la connexion enfichable comprend des connexions à encliqueter individuelles sur l'élément de squelette (1).

2. Roue de véhicule selon la revendication 1, **caractérisée en ce que**
le capteur (6, 7) comprend un capteur de contrainte, un capteur d'accélération et/ou un capteur de température.

3. Roue de véhicule selon l'une quelconque des revendications précédentes, **caractérisée en ce que**
d'autres composants électroniques sous forme de câbles, de générateurs d'énergie, de batteries et/ou d'actionneurs sont intégrés sur la structure de squelette (1).

4. Roue de véhicule selon la revendication 3, **caractérisée en ce que**
les autres composants électroniques sont fixés à la structure de squelette par collage.

5. Roue de véhicule selon l'une quelconque des revendications précédentes, **caractérisée en ce que**
qu'au moins certaines zones des éléments de suspension (5) et/ou des éléments annulaires (3, 4) sont renforcées par des éléments de renforcement (9, 10) sous la forme de fibres textiles, de fibres de verre et/ou de fibres métalliques.

6. Roue de véhicule selon la revendication 5, **caractérisée en ce que**
les éléments de renforcement (9, 10) sont disposés sur la structure de squelette (1) sous la forme d'un enroulement ou par un procédé d'impression en trois dimensions.

7. Roue de véhicule selon la revendication 5, **caractérisée en ce que**
la structure de squelette (1) pourvue des capteurs électroniques (6, 7) et des éléments de renforcements (9, 10) est enrobée d'un matériau élastomère (12).
